# FASCICULE DE BREVET EUROPEEN

(11) **EP 0 633 710 B1**
(45) Date de publication et mention de la délivrance du brevet: **04.12.1996**
(21) Numéro de dépôt: 94420181.3
(22) Date de dépôt: 28.06.1994
(51) Int. Cl.: H05B 41/29, H05B 41/38

(54) **Générateur d'alimentation électrique d'une lampe à arc**
Elektrisches Verschaltgerät für eine Bogenlampe
Power supply for an arc discharge lamp

(30) Priorité: 06.07.1993 FR 9308534
(43) Date de publication de la demande: 11.01.1995
(73) Titulaire: CABLECO, F-69210 Savigny (FR); Poumey, Michel, F-69130 Ecully (FR); SOCIETE DU GAZ DE BORDEAUX, F-33000 Bordeaux (FR); GENERAL EXPORT INDUSTRIES - SOGEXI, Société Anonyme, F-69380 LES CHERES (FR)
(72) Inventeur: Poumey, Michel, F-69130 Ecully (FR)
(74) Mandataire: Laurent, Michel

(56) Documents cités:
- EP-A- 0 601 874
- WO-A-91/20174
- FR-A- 2 489 069

## Description

L'invention concerne un générateur d'alimentation électrique pour une lampe du type à arc.

Par générateur, on entend également un dispositif susceptible de faire varier l'intensité du courant électrique, et partant la puissance traversant cette lampe.

A ce jour, on connaît différents types de dispositif-variateur de l'intensité du courant électrique dans une lampe. Outre les traditionnels gradateurs à triac ou à thyristors, fonctionnant selon le principe du hachage de la sinusoïde du courant alternatif distribué, on connaît également des dispositifs intégrant un circuit générant une tension à fréquence élevée, typiquement plusieurs dizaines de kilohertz, couplé magnétiquement à un circuit secondaire intégrant la lampe dont on désire faire varier l'intensité.

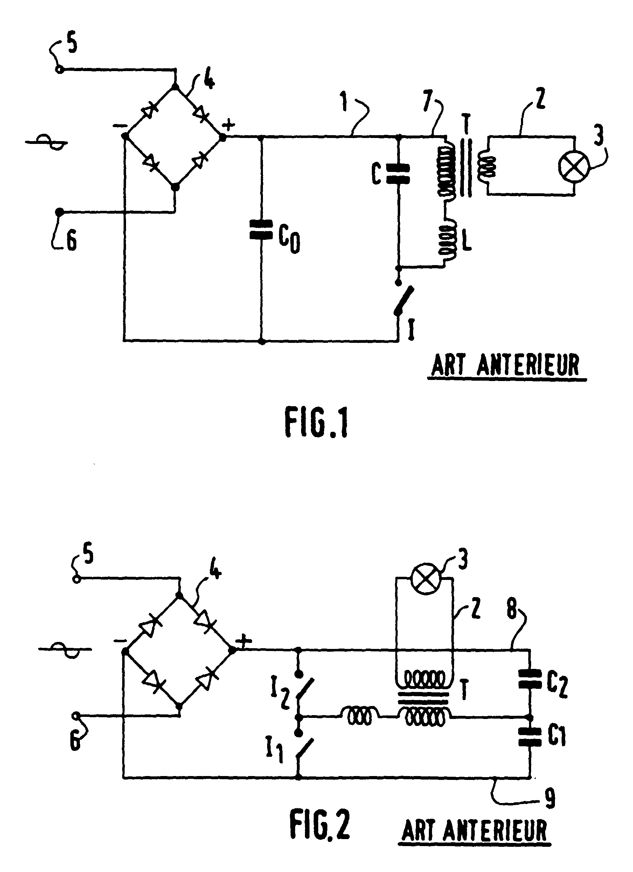

De tels circuits ont été représentés à titre d'art antérieur sur les figures 1 et 2 de la présente demande. Le circuit primaire (1) d'un tel dispositif comporte un circuit résonant (7), monté en série aux bornes d'un pont redresseur de tension (4), lui-même monté aux bornes (5) et (6) du secteur d'alimentation électrique. Le circuit résonant (7) intègre au moins une inductance en série avec un transformateur T, l'ensemble étant en parallèle avec un condensateur C.

Les caractéristiques des composants L et C sont choisis de telle sorte qu'à la fréquence de fonctionnement, le circuit (7) ainsi constitué entre en résonance. Parallèlement, un interrupteur du type rapide I, notamment un interrupteur haute fréquence du type transistor ou transistor IGBT ou transistor MOS, est monté en série avec le circuit résonant (7).

Le circuit secondaire (2) intègre en série la lampe (3), dont on désire faire varier la luminosité. Ce circuit secondaire est couplé magnétiquement au circuit primaire (1), par le biais de l'enroulement secondaire du transformateur T.

La variation d'énergie dans la lampe (3) est obtenue en modulant la durée de fermeture de l'interrupteur I. De fait, plus longue est cette durée de fermeture et plus importante est l'énergie transmise à la lampe par le biais du couplage magnétique opéré par le transformateur T.

Par ailleurs, ce transformateur T peut être remplacé par deux inductances, l'une constituant le primaire au niveau du circuit primaire (1), et l'autre constituant le secondaire au niveau du circuit secondaire (2), le couplage magnétique s'effectuant alors dans l'air ou dans tout milieu de perméabilité magnétique égale à 1.

Dans la figure 2, le circuit électrique correspond à un circuit dit "en demi-pont", et comporte deux interrupteurs I₁ et I₂, du type de ceux précédemment décrits, et deux condensateurs C₁ et C₂, entre lesquels est disposé un circuit résonant en série constitué par une inductance L et un transformateur T, dont le secondaire est monté en série avec la lampe (3).

L'impédance ramenée au primaire, fonction du rapport de transformation du transformateur T, est une résistance qui amortit le circuit résonant décrit.

Comme dans le cas précédent, l'importance de l'énergie transmise à la lampe est directement dépendante de la durée de fermeture des interrupteurs I₁ et I₂.

Si ces dispositifs sont particulièrement bien adaptés pour des lampes du type traditionnel, c'est à dire à filaments (à incandescence à gaz interne) ou à halogène, en revanche, ils ne fonctionnent pas pour des lampes du type à arc.

En effet, de manière connue, pour créer l'arc dans ce type de lampe, il est nécessaire de soumettre ladite lampe à une tension beaucoup plus élevée que sa tension de fonctionnement normale, et typiquement de un à plusieurs kilovolts par rapport à une tension de maintien de l'arc, de 100 volts par exemple.

De la sorte, le même circuit secondaire ne peut simultanément, compte-tenu de ces écarts importants au niveau de la tension, fournir la tension d'amorçage de l'arc, et une fois l'arc amorcé, limiter le courant de l'arc pour éviter la destruction de la lampe.

En outre, quand bien même techniquement ce montage serait réalisable, notamment en rajoutant en série avec la lampe une impédance de limitation de courant de l'arc (balast à inductance ou résistance), dès lors que l'on désire faire varier l'énergie en fonction de la luminosité souhaitée, l'arc risque de se désamorcer.

De fait, on risque de voir apparaître un clignotement correspondant tout d'abord à l'extinction de l'arc, et partant une disparition du courant secondaire. En conséquence, la tension aux bornes de la lampe remonte et l'arc se réamorce, puis une nouvelle chute de tension dûe au balast réapparaît avec une nouvelle extinction de l'arc etc...

En d'autres termes, les dispositifs disponibles à ce jour ne permettaient pas de faire varier de manière efficace l'intensité dans une lampe à arc sans induire son clignotement.

On a décrit dans le document FR-A-2 489 069 un dispositif d'allumage de lampe à arc, dont le circuit primaire n'est pas résonant, de sorte qu'il impose une impédance de limitation de courant au niveau du circuit secondaire, aboutissant à la longue à la polarisation des électrodes de l'arc, et partant, à une diminution progressive de la luminosité.

L'objet de l'invention est de proposer un générateur d'alimentation haute fréquence d'une lampe à arc, notamment de forte puissance (typiquement de 100 à 2.000 W), s'affranchissant de tous les inconvénients rappelés ci-dessus et de mise en oeuvre tout aussi aisée.

Ce générateur d'alimentation électrique haute fréquence d'une lampe à arc comprend :
- un circuit primaire branché aux bornes du secteur d'alimentation électrique alternatif et intégrant un inducteur électromagnétique branché sur un circuit résonant haute fréquence ;
- un circuit secondaire comprenant en série la lampe à arc et un capteur électromagnétique permettant d'assurer un couplage magnétique avec le circuit primaire à haute fréquence, le circuit secondaire étant constitué de deux circuits électriques montés en parallèle aux bornes de la lampe, chacun des deux circuits intégrant un capteur électromagnétique couplé avec l'inducteur électromagnétique du circuit primaire.

En d'autres termes, l'invention consiste à scinder le capteur électromagnétique du circuit secondaire en deux, à conférer à ces deux parties des caractéristiques électriques différentes, à monter en série aux bornes de chacune de ces deux parties, un circuit propre, de telle sorte à générer deux tensions distinctes, respectivement une tension d'amorçage de l'arc et une tension de maintien en fonctionnement dudit arc, et à coupler lesdits circuits à un circuit primaire résonant, susceptible d'assurer la fonction de limiteur de courant de par la présence d'une impédance de fuite.

Avantageusement, les deux circuits en parallèle du secondaire intègrent chacun une diode de séparation de circuit, dirigée passante vers la lampe afin d'éviter de court-circuiter les deux capteurs magnétiques entre eux au moment de l'amorçage de l'arc.

Selon une première forme de réalisation de l'invention, l'inducteur électromagnétique du circuit primaire est constitué par une inductance en série avec l'enroulement primaire d'un transformateur, et les deux capteurs électromagnétiques du circuit secondaire sont constitués de deux enroulements secondaires indépendants du même transformateur.

Dans une autre forme de réalisation de l'invention, les capteurs et l'inducteur électromagnétiques sont constitués par des selfs-inductances, le couplage magnétique des deux circuits primaire et secondaire s'effectuant dans l'air, ou dans un milieu de perméabilité magnétique égale à 1, en l'absence de tout circuit magnétique, tel que par exemple noyau de fer doux, ferrite ou dispositif analogue d'un transformateur.

Avantageusement, le circuit primaire comporte un pont redresseur de tension branché aux bornes du secteur d'alimentation électrique, auquel sont montés en série d'une part, au moins un interrupteur rapide, et d'autre part, un circuit résonant parallèle, comprenant en parallèle un transformateur et une inductance d'une part, et un premier condensateur d'autre part, dans le cadre d'un couplage magnétique par transformateur, ou une seule inductance montée en parallèle avec ledit premier condensateur dans le cadre du couplage magnétique dans l'air.

Avantageusement, le circuit primaire comporte en parallèle avec le circuit résonant et l'interrupteur rapide, un second condensateur, destiné à filtrer les composantes haute fréquence du courant d'alimentation par induction et ainsi, éviter tout risque de transfert de ces composantes sur le secteur d'alimentation électrique.

Dans une variante de l'invention, l'un des circuits du secondaire comporte en série avec l'enroulement destiné à assurer l'alimentation en courant de la lampe, et notamment le maintien de l'arc, et en lieu et place de l'une des diodes, un pont redresseur haute fréquence.

Dans une autre variante de l'invention, il est monté en série avec la lampe à décharge une self-inductance, et en parallèle aux bornes de ladite inductance un circuit tierce intégrant en série une diode et un relais électro-magnétique, ledit relais étant susceptible d'activer ou de désactiver un interrupteur monté aux bornes de la diode du circuit assurant l'alimentation de l'arc électrique dans la lampe à décharge.

La manière dont l'invention peut être réalisée et les avantages qui en découlent ressortiront mieux des exemples de réalisation qui suivent donnés à titre indicatif et non limitatif à l'appui des figures annexées.

Les figures 1 et 2, ainsi que déjà dit, correspondent à des schémas électriques de l'art antérieur destinés aux lampes à incandescence du type classique ou lampe à halogène.

La figure 3 est une représentation schématique du circuit électrique conforme à l'une des formes de réalisation de l'invention.

Les figures 4, 5, 6, 7 et 8 sont des représentations schématiques de circuits électriques d'autre formes de réalisation de l'invention.

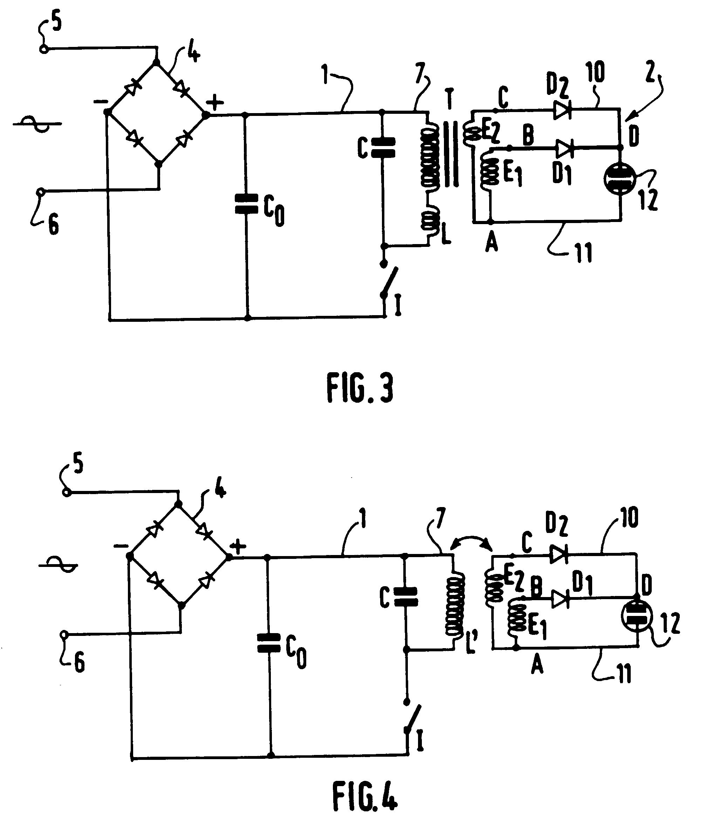

Selon l'invention et en référence avec la figure 3, le circuit primaire (1) branché sur le secteur d'alimentation électrique, typiquement 230 volts 50 Hertz, est du type de celui décrit dans le document FR-A-2 687 514 du Demandeur.

Comme déjà mentionné en liaison avec les figures 1 et 2, ce circuit primaire (1) comporte, branché aux bornes (5) et (6) de l'alimentation alternative sinusoïdale, un pont redresseur (4) comportant de manière connue quatre diodes montées de telle sorte à redresser le courant en sortie du pont.

On monte en série sur ce pont redresseur (4) un circuit résonant bouchon (7), constitué dans le cadre de la figure 3, d'une part d'une inductance L montée en série avec le primaire d'un transformateur T, et d'autre part un condensateur C monté en parallèle avec L et T, puis un interrupteur rapide I, typiquement constitué par un transistor bipolaire, ou de technologie MOS ou encore IGBT, bien connu pour son application en fermeture et ouverture rapide d'un circuit électrique.

Il ne sera pas décrit davantage le fonctionnement de l'interrupteur rapide, si ce n'est que la commande d'un tel interrupteur est effectuée au moyen d'un circuit indépendant monostable, couramment dénommé dans le domaine considéré par l'expression anglaise TIMER, lui-même étant sous la dépendance d'un circuit de synchronisation destiné à détecter la variation d'une grandeur physique, et dans le cas d'espèce à détecter le passage à zéro de la tension aux bornes de l'interrupteur I, induisant alors par le biais du circuit monostable la fermeture de ce dernier.

La durée de fermeture de l'interrupteur I est réglée au moyen d'un circuit de commande, qui gère en fait la durée de fonctionnement du circuit monostable.

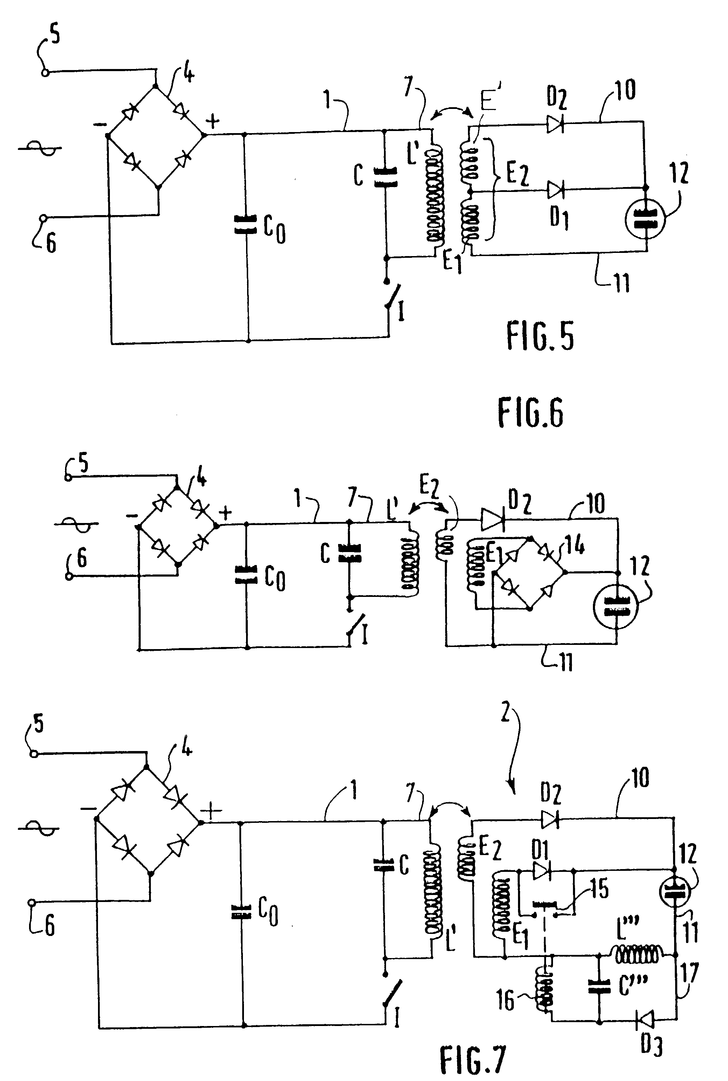

De fait, un tel circuit délivre au niveau du transformateur T, ou en liaison avec la figure 4 de la seule inductance L', un courant quasi-sinusoïdal dont la fréquence est liée à la fréquence propre du circuit oscillant (7), et de la durée de fermeture pendant laquelle la tension aux bornes de l'interrupteur I est nulle.

On a représenté dans la figure 4, un schéma électrique analogue à celui de la figure 3, mais dans lequel, l'enroulement primaire du transformateur T est remplacé par une inductance L'. Dans ce cas, l'inductance L montée en série avec l'enroulement primaire du transformateur T de la figure 3 n'est plus nécessaire, puisque elle assure le rôle de L, à savoir celui d'une impédance de fuite, permettant le contrôle du courant par limitation de celui-ci dans le circuit primaire, et par voie de conséquence, dans le circuit secondaire.

Le circuit secondaire est constitué en fait de deux circuits montés en parallèle, respectivement (10) et (11), chacun de ces circuits étant couplé par le biais d'un enroulement secondaire respectivement E₂ et E₁ du transformateur T, au circuit primaire.

Parallèlement, chacun des circuits (10) et (11) comporte une diode, respectivement D₂ et D₁, montées passantes en parallèle aux bornes de la lampe à arc (12).

En d'autres termes, les deux enroulements secondaires E₁ et E₂ ont une borne commune A, qui constitue également l'une des bornes de la lampe (12).

L'enroulement E₂ est destiné à fournir entre ses bornes A et C une tension à vide de un à plusieurs kilovolts, bien supérieure à celle nécessaire pour amorcer l'arc dans la lampe (12). Cet enroulement E₂ est réalisé avec du fil fin, présentant une impédance élevée, de sorte qu'il n'est pas capable en lui-même de fournir le courant nécessaire à l'entretien de l'arc à son courant nominal. En revanche, il peut maintenir un éclairement réduit de la lampe (12).

Dès lors que l'arc a ainsi été amorcé, l'enroulement E₁, dimensionné pour fournir la tension nominale de maintien de l'arc, typiquement une centaine de volts, et le courant nominal correspondant à l'éclairement maximum, prend ainsi le relai de E₂ et fournit à la lampe l'énergie nécessaire à travers la diode D₁.

On observe de fait que les deux enroulements E₁ et E₂ débitent alors simultanément du courant, mais l'intensité du courant fourni par E₁ est nettement plus élevée.

Les diodes D₁ et D₂ permettent d'éviter la mise en court-circuit des enroulements E₁ et E₂ entre eux lors de l'amorçage de l'arc.

Dans une variante de l'invention représentée sur la figure 4, les deux enroulement E₁ et E₂ sont en fait constituées par des self-inductances, couplées magnétiquement avec l'inductance L' du circuit primaire.

D'un point de vue réalisation pratique, les enroulements E1 et E2 sont avantageusement encastrés coaxialement dans l'inductance L' du circuit primaire, soit longitudinalement, soit encore sous la forme de spires plates, afin de diminuer l'encombrement.

Le courant qui traverse L' ou T, magnétiquement couplé avec les enroulements E₁ et E₂ du circuit secondaire, induit dans ceux-ci des courants, dont la fréquence est égale à celle du circuit résonant primaire (7). Ainsi, le courant qui circule dans la lampe (12) a la même fréquence et la même forme que le courant traversant l'inductance L' ou l'enroulement primaire du tranformateur T. Compte tenu du fait que le circuit primaire est résonant, l'inductance L ou L' n'est jamais nulle, et donc induit en permanence une limitation de courant dans le circuit primaire, se traduisant également par une limitation de courant dans le circuit secondaire.

On peut diminuer l'éclairement par diminution des durées de fermeture des interrupteurs I, ou I₁ et I₂ (le circuit primaire de la figure 2 pouvant également fonctionner dans le cadre de l'invention), sans pour autant éteindre l'arc par la plage de réglagle souhaité, du fait que l'enroulement E₂ débite en permanence une énergie minimum suffisante, qui interdit le désamorçage, même si l'enroulement E₁ ne fonctionne plus, c'est à dire, ne délivre aucun courant faute d'une induction magnétique suffisante à son niveau. En d'autres termes, on observe une diminution de la luminosité.

Ce dispositif permet ainsi de manière très simple d'alimenter une lampe à arc à partir d'un variateur d'énergie performant, compte tenu du fonctionnement à haute fréquence et du recours à l'induction magnétique.

A titre exemplatif, on donne les valeurs suivantes pour un circuit de quatre tubes fluorescents de 18 Watts montés en série :
E₂ : enroulement de 2 000 spires
E₁ : enroulement de 200 spires
primaire : enroulement de 150 spires.
fréquence du fonctionnement du dispositif est de 40 kilohertz.

Bien entendu, ce dispositif est adaptable à tout type de lampes à arc, et notamment fluorescent du type compact ou ballon, les lampes à décharge à vapeur de mercure, les lampes à décharge à vapeur de sodium, ainsi qu'à iodure métallique etc..., notamment de forte puissance, telle que par exemple comprise entre 100 et 2.000 W. Dans le cas des tubes fluorescents, les filaments de préchauffage ne sont plus utilisés que comme des électrodes, ce qui présente l'avantage de ne plus les user lors d'allumages et d'extinctions fréquents.

Dans une variante de l'invention représentée en figure 5, l'enroulement E₂, destiné à permettre la délivrance de la tension d'amorçage de l'arc, est constitué par la somme des deux enroulements E₁ et E', montés en série.

Dans une autre variante représentée sur la figure 6, l'enroulement E₁ est monté aux bornes d'un pont redresseur de tension (14) à fonctionnement haute fréquence, la lampe à arc (12) étant montée aux bornes de sortie dudit pont. De la sorte, les deux alternances du circuit primaire sont utilisées pour l'alimentation en énergie de la lampe (12). Ce faisant, on diminue les contraintes imposées au circuit primaire (1), et notamment à l'interrupteur I.

Enfin, dans une autre variante représentée en figure 7, le circuit (11) d'alimentation de l'arc de la lampe (12) comporte un interrupteur (15), activé au moyen d'un relais électromagnétique (16). Le circuit (10) d'amorçage de l'arc est quant à lui direct par la diode D₂. Le circuit (11) comporte en série avec la lampe (12) une self-inductance L"', aux bornes de laquelle est montée en parallèle un troisième circuit électrique (17), intégrant en série une diode D₃ et l'enroulement magnétique du relais électro-magnétique (16). Enfin, la diode D₃ est connectée audit circuit (11) par le biais d'un condensateur C"'.

Ainsi, lors de l'amorçage de l'arc électrique de la lampe par le biais du circuit électrique (10), l'interrupteur (15) est ouvert, évitant de court-circuiter les enroulements E₁ et E₂. En revanche, dès lors que l'arc est amorcé, l'interrupteur (15) se ferme sous l'action du relais électro-magnétique (16), et le circuit (11) débite dans la lampe (12), assurant le maintien de l'arc. Il se crée en effet, dès l'amorçage de l'arc, une différence de potentiel aux bornes de l'inductance L"', redressée par la diode D₃, et filtrée par C"'. Cette différence de potentiel actionne le relais électro-magnétique (16), fermant l'interrupteur (15), shuntant ainsi la diode D₁, et permettant le maintien de l'arc.

En cas de microcoupure du secteur ou de tout phénomène susceptible d'induire le désamorçage de l'arc électrique au sein de la lampe (12), le relais électro-magnétique (15) retombe, permettant à nouveau, dès refonctionnement du secteur, le réamorçage instantané dudit arc, puisque le circuit (10) ne peut plus alors débiter dans le circuit (11).

## Revendications

1. Générateur d'alimentation électrique haute fréquence d'une lampe à arc (12) comprenant un circuit primaire (1) branché aux bornes (5, 6) du secteur d'alimentation électrique alternatif et intégrant un inducteur électro-magnétique (L',T) monté sur un circuit résonant haute fréquence (7), et un circuit secondaire (2), intégrant la lampe à arc (12), et couplé magnétiquement audit circuit primaire (1), ***caractérisé*** en ce que ledit circuit secondaire (2) comprend en série avec la lampe à arc (12) un capteur électromagnétique (E₁, E₂) permettant d'assurer le couplage magnétique avec le circuit primaire (1) à haute fréquence, ledit circuit secondaire (2) étant constitué de deux circuits électriques montés en parallèle (10, 11) aux bornes de la lampe (12), chacun des deux circuits (10, 11) intégrant un capteur électromagnétique couplé avec l'inducteur électromagnétique du circuit primaire (1).

2. Générateur selon la revendication 1, ***caractérisé*** en ce que le circuit (11) constitutif du circuit secondaire (2), destiné à délivrer la tension de fonctionnement nominale de maintien de l'arc de la lampe (12), et à fournir à celle-ci l'intensité nécessaire à son éclairement, comporte en série avec la lampe (12) une self-inductance (L"'), et en parallèle aux bornes de ladite inductance (L"') un troisième circuit (17), intégrant en série une diode (D₃) et un relais électro-magnétique (16), ledit relais étant susceptible d'activer ou de désactiver un interrupteur (15) monté aux bornes d'une diode (D₁) montée passante vers la lampe (12) dudit circuit (11), en fonction de l'état de l'arc dans la lampe (12), et donc susceptible d'éviter d'une part, de court-circuiter les enroulements (E₁) et (E₂) lors de l'amorçage de l'arc dans la lampe (12), l'interrupteur (15) étant alors ouvert, et d'autre part, d'alimenter l'arc en courant alternatif après amorçage, l'interrupteur (15) étant alors fermé et shuntant la diode (D₁).

3. Générateur selon la revendication 1, ***caractérisé*** en ce que les deux circuits (10,11) constitutifs du circuit secondaire (2) intègrent chacun une diode (D₁, D₂), montée passante vers la lampe (12), afin d'éviter de court-circuiter les deux capteurs électromagnétiques (E₁,E₂) entre eux, lors de l'amorçage de l'arc de la lampe (12).

4. Générateur selon l'une des revendications 1 à 3, ***caractérisé*** en ce que l'inducteur électromagnétique du circuit primaire (1) est constitué d'une inductance (L) montée en série avec l'enroulement primaire d'un transformateur (T), et en ce que les deux capteurs électromagnétiques du circuit secondaire (2) sont constitués de deux enroulements secondaires indépendants du même transformateur (T).

5. Générateur selon l'une des revendications 1 à 3, ***caractérisé*** en ce que les capteurs et l'inducteur électromagnétiques respectivement des circuits secondaire (2) et primaire (1) sont constitués par des self-inductances, le couplage magnétique des deux circuits primaire et secondaire s'effectuant dans l'air, ou dans un milieu de perméabilité magnétique égale à 1, en l'absence de tout circuit magnétique.

6. Générateur selon l'une des revendications 1 à 5, ***caractérisé*** en ce que l'un (E₂) des capteurs électromagnétiques, destiné à assurer la délivrance de la tension d'amorçage de l'arc de la lampe à arc (12), est constitué par la somme de deux capteurs (E₁, E') montés en série, le capteur (E₁) étant raccordé par le biais de la diode (D₁) à l'une des bornes de la lampe (12), et étant destiné d'une part, à délivrer la tension de fonctionnement nominale de maintien de l'arc de ladite lampe, et d'autre part, à fournir à celle-ci l'intensité nécessaire à son éclairement.

7. Générateur selon la revendication 1, ***caractérisé :***
- en ce que le capteur électromagnétique (E₁), destiné à délivrer la tension de fonctionnement nominale de maintien de l'arc de la lampe (12), et à fournir à celle-ci l'intensité nécessaire à son éclairement, est monté aux bornes d'un pont redresseur de tension (14) à fonctionnement à haute fréquence, dont les bornes de sortie sont reliées à la lampe (12) ;
- et en ce que le capteur électromagnétique (E₂), destiné à assurer la délivrance de la tension d'amorçage de l'arc de la lampe à arc (12), est également monté aux bornes de la dite lampe (12), par l'intermédiaire d'un circuit électrique (10) dont l'une des branches intègre une diode (D₂).

8. Générateur selon l'une des revendications 1 à 7, ***caractérisé*** en ce que le circuit primaire (1) comporte un pont redresseur de tension (4) branché aux bornes (5, 6) du secteur d'alimentation électrique, et auquel sont montés en série d'une part, au moins un interrupteur rapide (I), et d'autre part, un circuit résonant parallèle (7), comprenant en parallèle un transformateur (T) et l'inductance (L) d'une part, et un premier condensateur (C) d'autre part, dans le cadre d'un couplage magnétique par transformateur, ou une seule inductance (L') montée en parallèle avec le premier condensateur (C) dans le cadre du couplage magnétique dans l'air.

9. Générateur selon la revendication 8, ***caractérisé*** en ce que le circuit primaire (1) comporte en parallèle avec le circuit résonant (7) et l'interrupteur rapide (I), un second condensateur (C₀), destiné à filtrer les composantes haute fréquence du courant d'alimentation par induction et ainsi, éviter tout risque de transfert de ces composantes sur le secteur d'alimentation électrique.

10. Générateur selon l'une des revendications 1 à 3 et 6 et 7, ***caractérisé*** en ce que le circuit primaire (1) comporte un pont redresseur de tension (4) branché aux bornes (5,6) du secteur d'alimentation électrique, et auquel est monté un circuit (8,9) en demi-pont, comportant deux interrupteurs rapides (I₁,I₂) et deux condensateurs (C₁,C₂), entre lesquels est disposé un circuit résonant en série constitué par l'enroulement primaire du transformateur (T) et l'inductance (L).

## Patentansprüche

1. Hochfrequenz-Generator zur elektrischen Stromversorgung einer Bogenlampe (12), bestehend aus einem Primärstromkreis (1), welcher an die Anschlußklemmen (5,6) des Wechselstromversorgungsnetzes angeschlossen ist und einen an einem Hochfrequenz-Resonanzkreis (7) angebrachten elektromagnetischen Induktor (L',T) umfaßt, und aus einem Sekundärstromkreis (2), welcher die Bogenlampe (12) umfaßt und magnetisch mit dem genannten Primärstromkreis (1) gekoppelt ist, **dadurch gekennzeichnet,** daß der genannte Sekundärstromkreis (2) in Reihe mit der Bogenlampe (12) einen elektromagnetischen Aufnehmer (E₁, E₂) umfaßt, der die magnetische Kopplung mit dem Hochfrequenz-Primärstromkreis (1) sicherstellt, wobei der genannte Sekundärstromkreis (2) aus zwei parallel an die Anschlußklemmen der Lampe (12) angeschlossenen elektrischen Schaltungen (10,11) besteht und jede der beiden Schaltungen (10,11) einen mit dem elektromagnetischen Induktor des Primärstromkreises (1) gekoppelten elektromagnetischen Aufnehmer einschließt.

2. Generator nach Anspruch 1, **dadurch gekennzeichnet,** daß die einen Bestandteil des Sekundärstromkreises (2) bildende Schaltung (11) zur Abgabe der Nenn-Arbeitsspannung zur Versorgung des Bogens der Lampe (12) und zu deren Speisung mit der für ihr Erleuchten notwendigen Leistung in Reihe mit der Lampe (12) eine Selbstinduktivität (L"') und parallel zu den Anschlußklemmen der genannten Induktivität (L"') eine dritte Schaltung (17) aufweist, welche in Reihe eine Diode (D₃) und ein elektromagnetisches Relais (16) umfaßt, wobei das genannte Relais abhängig von dem Zustand des Bogens in der Lampe (12) einen Schalter (15) ein- oder ausschalten kann, der an den Anschlußklemmen einer zur Lampe (12) der genannten Schaltung (11) hin durchlässig angebrachten Diode (D₁) angeordnet ist, und das Relais somit einerseits das Kurzschließen der Wicklungen (E₁) und (E₂) während der Zündung des Bogens in der Lampe (12), wobei der Schalter (15) geöffnet ist, vermeiden kann und andererseits den Bogen nach der Zündung mit Wechselstrom speisen kann, wobei der Schalter (15) geschlossen ist und die Diode (D₁) überbrückt.

3. Generator nach Anspruch 1, **dadurch gekennzeichnet**, daß die beiden den Sekundärstromkreis (2) bildenden Schaltungen (10,11) jeweils eine zur Lampe (12) hin durchlässig angebrachte Diode (D₁, D₂) umfassen, um ein Kurzschließen der beiden elektromagnetischen Aufnehmer (E₁, E₂) miteinander während der Zündung des Bogens der Lampe (12) zu vermeiden.

4. Generator nach einem der Ansprüche 1 bis 3, **dadurch gekennzeichnet,** daß der elektromagnetische Induktor des Primärstromkreises (1) aus einer in Reihe mit der Primärwicklung eines Transformators (T) geschalteten Induktivität (L) besteht und daß die beiden elektromagnetischen Aufnehmer des Sekundärstromkreises (2) aus zwei unabhängigen Sekundärwicklungen desselben Transformators (T) bestehen.

5. Generator nach einem der Ansprüche 1 bis 3, **dadurch gekennzeichnet,** daß die zu dem Sekundärstromkreis (2) gehörigen elektromagnetischen Aufnehmer und der zu dem Primärstromkreis (1) gehörige elektromagnetische Induktor aus Selbstinduktivitäten bestehen, wobei die magnetische Kopplung des Primär- und des Sekundärstromkreises in der Luft oder in einer Umgebung, deren magnetische Permeabilität gleich 1 ist, ohne jeglichen Magnetkreis erfolgt.

6. Generator nach einem der Ansprüche 1 bis 5, **dadurch gekennzeichnet,** daß der eine (E₂) der elektromagnetischen Aufnehmer, welcher zur Abgabe der Zündspannung für den Bogen der Bogenlampe (12) bestimmt ist, aus der Summe zweier in Reihe geschalteter Aufnehmer (E₁, E') besteht, wobei der Aufnehmer (E₁) über die Diode (D₁) mit einer der Anschlußklemmen der Lampe (12) verbunden ist und dazu bestimmt ist, einerseits die Nenn-Arbeitsspannung zur Versorgung des Bogens der genannten Lampe abzugeben und andererseits diese mit der für ihr Erleuchten notwendigen Leistung zu speisen.

7. Generator nach Anspruch 1, **dadurch gekennzeichnet,**
- daß der elektromagnetische Aufnehmer (E₁) zur Abgabe der Nenn-Arbeitsspannung zur Versorgung des Bogens der Lampe (12) und zu deren Speisung mit der für ihr Erleuchten notwendigen Leistung an die Anschlußklemmen einer hochfrequenztauglichen Spannungsgleichrichterbrücke (14) angeschlossen ist, deren Ausgangsklemmen mit der Lampe (12) verbunden sind;
- und daß der elektromagnetische Aufnehmer (E₂) zur Abgabe der Zündspannung für den Bogen der Bogenlampe (12) an die Anschlußklemmen der genannten Lampe (12) über eine elektrische Schaltung (10) angeschlossen ist, von deren Zweigen einer eine Diode (D₂) umfaßt.

8. Generator nach einem der Ansprüche 1 bis 7, **dadurch gekennzeichnet,** daß der Primärstromkreis (1) eine Spannungsgleichrichterbrücke (4) aufweist, die an die Anschlußklemmen (5,6) des elektrischen Stromversorgungsnetzes angeschlossen ist und an die in Reihe einerseits wenigstens ein schneller Schalter (I) und andererseits ein paralleler Resonanzkreis (7) angeschlossen sind, wobei letzterer parallelgeschaltet einerseits einen Transformator (T) und die Induktivität (L) und andererseits einen ersten Kondensator (C) im Fall der magnetischen Kopplung mittels Transformator umfaßt oder, im Fall der magnetischen Kopplung in der Luft, eine einzige, parallel zu dem ersten Kondensator (C) geschaltete Induktivität (L') umfaßt.

9. Generator nach Anspruch 8, **dadurch gekennzeichnet,** daß der Primärstromkreis (1) parallel zu dem Resonanzkreis (7) und dem schnellen Schalter (I) einen zweiten Kondensator (C₀) umfaßt, der dazu bestimmt ist, die Hochfrequenzkomponenten des Stroms für die induktive Stromversorgung zu filtern und so jedes Risiko einer Übertragung dieser Komponenten auf das elektrische Stromversorgungsnetz zu vermeiden.

10. Generator nach einem der Ansprüche 1 bis 4 und 7, **dadurch gekennzeichnet**, daß der Primärstromkreis (1) eine Spannungsgleichrichterbrücke (4) aufweist, welche an die Anschlußklemmen (5,6) des elektrischen Stromversorgungsnetzes angeschlossen ist und an die eine Halbbrücken-Schaltung (8,9) angeschlossen ist, welche zwei schnelle Schalter (I₁, I₂) und zwei Kondensatoren (C₁, C₂) umfaßt, zwischen denen in Reihe ein Resonanzkreis bestehend aus der Primärwicklung des Transformators (T) und der Induktivität (L) angeordnet ist.

## Claims

1. A generator supplying high-frequency power to an arc lamp (12) comprising a primary circuit (1) connected up to the terminals (5, 6) of the alternating power-supply mains and incorporating an electromagnetic inductor (L', T) connected to a high-frequency resonant circuit (7), and a secondary circuit (2) incorporating the arc lamp (12) and magnetically coupled to said primary circuit (1), characterized in that said secondary circuit (12) comprises in series with-the arc lamp (12) an electromagnetic sensor (E₁, E₂) making it possible to provide for magnetic coupling with the primary circuit (1) at high frequency, said secondary circuit (2) being formed by two electrical circuits (10, 11) mounted in parallel with the terminals of the lamp (12), each of the two circuits (10, 11) incorporating an electromagnetic sensor coupled with the electromagnetic inductor of the primary circuit (1).

2. The generator as claimed in claim 1, wherein the circuit (11) forming the secondary circuit (2), intended to deliver the rated operating voltage for maintaining the arc of the lamp (12) and to deliver to the latter the current necessary for illuminating it, includes in series with the lamp (12), an inductor (L''') and, in parallel with the terminals of said inductor (L"'), a third circuit (17) incorporating, in series, a diode (D3) and an electromagnetic relay (16), said relay being capable of activating or deactivating a switch (15) connected to the terminals of the diode (D₁) of said circuit (11) depending on the state of the arc in the lamp (12), and therefore capable of preventing, on the one hand, the windings (E₁) and (E₂) from short-circuiting when striking the arc in the lamp (12), the switch (15) then being open and, on the other hand, of supplying the arc with alternating current after striking, the switch (15) then being closed and shunting the diode (D₁).

3. The generator as claimed in claim 1, wherein the two circuits (10, 11) forming the secondary circuit (2) each incorporate a diode (D₁, D₂), mounted so as to conduct towards the lamp (12), in order to prevent the two electromagnetic sensors (E₁, E₂) from short-circuiting together, upon striking the arc of the lamp (12).

4. The generator as claimed in one of claims 1 to 3, wherein the electromagnetic inductor of the primary circuit (1) is formed by an inductor (L) mounted in series with the primary winding of a transformer (T), and the two electromagnetic sensors of the secondary circuit (2) are formed by two independent secondary windings of the same transformer (T).

5. The generator as claimed in one of claims 1 to 3, wherein the respective electromagnetic sensors and the electromagnetic inductor of the secondary (2) and primary (1) circuits are formed by inductors, the magnetic coupling of the two primary and secondary circuits taking place through the air or in a medium of magnetic permeability equal to 1, in the absence of any magnetic circuit.

6. The generator as claimed in one of claims 1 to 5, wherein one (E₂) of the electromagnetic sensors, intended to deliver the voltage for striking the arc of the arc lamp (12), is formed by the sum of two sensors (E₁, E') mounted in series, the sensor E₁ being connected via the diode (D₁) to one of the terminals of the lamp (12) and being intended to deliver the rated operating voltage for maintaining the arc of said lamp and to deliver to the latter the current necessary for illuminating it.

7. The generator as claimed in claim 1:
- wherein the electromagnetic sensor (E₁), intended to deliver the rated operating voltage for maintaining the arc of the lamp (12) and to deliver to the latter the current necessary for illuminating it, is connected to the terminals of a voltage rectifier bridge (14) operating at high frequency, the output terminals of which are connected to the lamp (12) ;
- and wherein the electromagnetic sensor (E₂), intended to deliver the voltage for striking the arc of the arc lamp (12), is also connected to the terminals of said lamp (12), via an electrical circuit (10), one of the branches of which incorporates a diode (D₂).

8. The generator as claimed in one of claims 1 to 7, wherein the primary circuit (1) includes a voltage rectifier bridge (4) connected up to the terminals (5, 6) of the power supply mains, and with which are mounted, in series, on the one hand, at least one rapid switch (I) and, on the other hand, a parallel resonant circuit (7) comprising, in parallel, a transformer (T) and the inductor (L) on the one hand, and a capacitor (C) on the other hand, for the purpose of magnetic coupling by the transformer, or a single inductor (L') mounted in parallel with a capacitor (C) for the purpose of magnetic coupling through the air.

9. The generator as claimed in claim 8, wherein the primary circuit (1) includes, in parallel with the resonant circuit (7) and the rapid switch (I), a capacitor (C₀) intended to filter out the high-frequency components of the supply current by induction and thus to prevent any risk of these components being transferred to the power-supply mains.

10. The generator as claimed in one of claims 1 to 4 and 7, wherein the primary circuit (1) includes a voltage rectifier bridge (4) connected up to the terminals (5, 6) of the power-supply mains, and to which is connected a half-bridge circuit (8, 9) which includes two rapid switches (I₁, I₂) and two capacitors (C₁, C₂) between which is placed a resonant series circuit formed by the primary winding of the transformer (T) and the inductor (L).
